# EUROPÄISCHE PATENTSCHRIFT

(11) **EP 3 443 764 B1**
(45) Veröffentlichungstag und Bekanntmachung des Hinweises auf die Patenterteilung: **26.02.2020**
(21) Anmeldenummer: 17715440.8
(22) Anmeldetag: 31.03.2017
(51) Int. Cl.: H04W 12/06, G06F 13/40, H04W 4/02

(54) **VERFAHREN UND VORRICHTUNG ZUM INDIREKTEN ÜBERTRAGEN VON INFORMATIONEN VON EINER ERSTEN MOBILEN SENDEKOMPONENTE ÜBER EINE ZWEITE MOBILE SENDEKOMPONENTE HIN ZU EINER STATIONÄREN SERVERVORRICHTUNG**
METHOD AND DEVICE FOR INDIRECTLY TRANSFERRING INFORMATION FROM A FIRST MOBILE TRANSMITTING COMPONENT TO A STATIONARY SERVER DEVICE VIA A SECOND MOBILE TRANSMITTING COMPONENT
PROCÉDÉ ET DISPOSITIF DE TRANSMISSION INDIRECTE D'INFORMATIONS D'UN PREMIER COMPOSANT D'ÉMISSION MOBILE À UN DISPOSITIF SERVEUR STATIONNAIRE PAR LE BIAIS D'UN SECOND COMPOSANT D'ÉMISSION MOBILE

(30) Priorität: 15.04.2016 DE 102016004561
(43) Veröffentlichungstag der Anmeldung: 20.02.2019
(73) Patentinhaber: Audi AG, 85045 Ingolstadt (DE)
(72) Erfinder: SELLSCHOPP, Stefan, 85221 Dachau (DE)
(86) Internationale Anmeldenummer: PCT/EP2017/057646
(87) Internationale Veröffentlichungsnummer: WO 2017/178242

(56) Entgegenhaltungen:
- EP-A1- 2 211 499
- DE-A1-102012 012 565
- DE-A1-102014 010 752
- US-A1- 2013 042 314
- US-A1- 2014 270 158

## Beschreibung

Die Erfindung betrifft ein Verfahren zum indirekten Übertragen von Informationen von einer ersten mobilen Sendekomponente über eine zweite mobile Sendekomponente hin zu einer stationären Servervorrichtung. Eine der Sendekomponenten ist ein Kraftfahrzeug und die andere Sendekomponente ist ein portables Endgerät. Es können also die Informationen von dem Kraftfahrzeug über das Endgerät zu der Servervorrichtung oder umgekehrt von dem Endgerät über das Kraftfahrzeug zu der Servervorrichtung übertragen werden. Die Informationen werden in Form von Daten übertragen. Zu der Erfindung gehört entsprechend auch eine Vorrichtung zum Erzeugen dieser Daten, wobei die Vorrichtung ein Kraftfahrzeug oder ein mobiles Endgerät sein kann.

Die beschriebene Servervorrichtung kann beispielsweise ein Server des Internets sein. Benutzern von Kraftfahrzeugen ist es möglich, auf einer solchen Servervorrichtung einen Benutzeraccount anzulegen, um zum Beispiel personalisierte Dienste nutzen zu können. Da diese Dienste oftmals mit dem Kraftfahrzeug des Benutzers in Verbindung stehen, ist innerhalb des Benutzeraccounts eine Verknüpfung von Informationen aus dem Kraftfahrzeug mit den Benutzerdaten nötig. Deshalb kann der Benutzer gezwungen sein, aufwändig sein Kraftfahrzeug betreffende Informationen beispielsweise in einer Applikation (App) seines mobilen Endgeräts einzugeben, über welche sich der Benutzer bei der Servervorrichtung identifiziert oder eingeloggt hat, um seinen Benutzeraccount zu verwalten. Es müssen also händisch Informationen betreffend das Kraftfahrzeug in das Endgerät eingegeben werden, damit sie ausgehend von dem Endgerät an die Servervorrichtung übermittelt werden können.

Aus der DE 10 2012 012 565 A1 ist bekannt, dass ein Kraftfahrzeug Informationen als einen QR-Code auf einem Fahrzeug-Bildschirm anzeigen kann, damit ein Benutzer den QR-Code mittels seines mobilen Endgeräts abfotografieren kann und hierdurch die Informationen über das Kraftfahrzeug in dem mobilen Endgerät bereitstehen, um sie an eine Servervorrichtung weiterzuleiten. Hierbei ist man daran interessiert, dass der abfotografierte QR-Code nicht unautorisiert mehrmals verwendet wird, um das Kraftfahrzeug beispielsweise in zwei unterschiedlichen Benutzeraccounts zu registrieren.
Aus der DE 10 2013 100 756 B3 ist bekannt, dass ein Schließsystem eines Kraftfahrzeugs mittels eines mobilen Endgeräts bedient werden kann. Das mobile Endgerät empfängt hierzu aus einer Servervorrichtung einen Zugangscode, der dann über das mobile Endgerät an das Schließsystem des Kraftfahrzeugs weitergegeben werden kann, sodass dieses das Kraftfahrzeug entriegelt. Die Zugangsdaten sind hierbei zeitlich begrenzt, das heißt sie weisen eine Verfallszeit auf. Die eingangs beschriebenen Informationen über das Kraftfahrzeug, die in dem Benutzeraccount der Servervorrichtung zu speichern sind, sind dagegen in der Regel dauerhaft gültig, sodass sie keine Verfallszeit aufweisen.

Aus der US 2013/0042314 A1 ist bekannt, zum Verifizieren eines Endgeräts durch eine Servervorrichtung von dem Endgerät Benutzerdaten, wie beispielsweise ein Passwort, zu empfangen und bei erfolgreicher Verifizierung der Benutzerdaten ein Freigabesignal an ein Kraftfahrzeug auszusenden, sodass dieses das Endgerät für eine Bedienung akzeptiert. Bei dieser Lösung ist also jeweils eine direkte Kommunikationsverbindung zwischen Endgerät und Servervorrichtung einerseits und Kraftfahrzeug und Servervorrichtung andererseits erforderlich.
Aus der DE 10 2012 211 731 A1 ist bekannt, zum Verifizieren eines mobilen Endgeräts dessen aktuellen Aufenthaltsort mit einem Messort zu vergleichen, an welchem ein Sensor eine Belegung eines Sitzplatzes detektiert hat. Eine indirekte Übertragung von Informationen von einer ersten Sendekomponente über eine zweite Sendekomponente hin zu einer Servervorrichtung ist hierbei nicht vorgesehen.

DE10 2012 012565 A1 offenbart die Merkmale des Oberbegriffs.

US 2015 188918 A1 beschreibt Positions- und Distanzermittlung von Sendekomponenten anhand von Signallaufzeiten, jedoch nicht das Generieren und Übermitteln von Positionsdaten.

Der Erfindung liegt die Aufgabe zugrunde, Informationen von einer ersten Sendekomponente indirekt über eine zweite Sendekomponente hin zu einer Servervorrichtung zu übertragen und hierbei eine nicht-autorisierte Wiederverwendung der Informationen zu unterbinden.

Die Aufgabe wird durch die Gegenstände der unabhängigen Patentansprüche gelöst. Vorteilhafte Weiterbildungen der Erfindung ergeben sich durch die Merkmale der abhängigen Patentansprüche, die folgende Beschreibung sowie die Figuren.

Durch die Erfindung ist ein Verfahren zum indirekten Übertragen von Informationen von einer ersten mobilen Sendekomponente über eine zweite mobile Sendekomponente hin zu einer stationären Servervorrichtung bereitgestellt. Eine der Sendekomponenten kann ein Kraftfahrzeug und die andere der Sendekomponenten ein portables Endgerät sein. Ein portables Endgerät kann z.B. ein Smartphone oder ein Tablet-PC oder eine Smartwatch sein. Bei dem Verfahren werden die Informationen von der ersten Sendekomponente, also beispielsweise einem Kraftfahrzeug, über eine erste Übertragungsschnittstelle zu der zweiten Sendekomponente, also dann dem Endgerät, und von der zweiten Sendekomponente über eine zweite Übertragungsschnittstelle zu der Servervorrichtung übertragen. Die besagten Informationen sind während der Übertragung oder bei der Übertragung durch Daten repräsentiert. Mit anderen Worten kann die Information beispielsweise digital codiert sein. Die besagte zweite Übertragungsschnittstelle kann beispielsweise eine Mobilfunkverbindung und/oder eine Internetverbindung umfassen.

Damit die Informationen nach dem Aussenden durch die erste Sendekomponente nur für die vorgesehene oder geplante einmalige Übertragung hin zur Servervorrichtung benutzt und nicht beispielsweise zu einem späteren Zeitpunkt noch einmal mittels eines anderen Endgeräts an die Servervorrichtung übertragen werden, ist erfindungsgemäß vorgesehen, dass die Daten durch die erste Sendekomponente für das Übertragen der Informationen dynamisch generiert werden, sodass bei einem wiederholten Übertragen der Informationen von der ersten Sendekomponente und/oder zum Übertragen der Informationen an eine andere Servervorrichtung jeweils unterschiedliche Daten bereitgestellt werden. Durch die Servervorrichtung werden die in den Daten enthaltenen Informationen nur akzeptiert, falls die Daten ein vorbestimmtes Validierungskriterium erfüllen. Mit anderen Worten ist die Servervorrichtung dazu eingerichtet, das dynamische Generieren der Daten zu berücksichtigen und zu überprüfen, ob die empfangenen Daten dahingehend plausibel sind, dass sie tatsächlich von der ersten Sendekomponente für die Übertragung dynamisch generiert worden sind. Mit anderen Worten verifiziert die Servervorrichtung, dass es sich bei den von ihr empfangenen Daten nicht um zwischengespeicherte Daten handelt, die zu einem vorangegangenen Zeitpunkt für eine andere Übertragung vorgesehen waren oder genutzt worden sind. Beispielsweise kann die Servervorrichtung überprüfen, ob sie die Daten schon einmal zuvor von einer anderen Sendekomponente empfangen hat.

Durch die Erfindung ergibt sich der Vorteil, dass die Daten nur einmal für die geplante Übertragung der Informationen genutzt werden können und danach für eine Manipulation in der Servervorrichtung nutzlos oder ungeeignet sind.

Das dynamische Generieren erfolgt bevorzugt dadurch, dass durch die erste Sendevorrichtung in die Daten eine aktuelle Zeitangabe integriert wird und die Servervorrichtung die Informationen nur akzeptiert, falls die Zeitangabe innerhalb eines vorbestimmten Zeitintervalls liegt. Dies entspricht dann dem Validierungskriterium, durch welches das entsprechende Zeitintervall festgelegt oder angegeben wird. Beispielsweise kann das Validierungskriterium besagen, dass die Daten gemäß der Zeitangabe nicht älter als eine vorbestimmte Höchstzeitdauer sein dürfen, beispielsweise nicht älter als 10 Minuten. Zusätzlich oder alternativ zu einer Zeitangabe kann vorgesehen sein, dass durch die erste Sendevorrichtung in die Daten ein Gültigkeitszeitintervall integriert wird und die Servervorrichtung die Informationen nur akzeptiert, falls gemäß dem Validierungskriterium eine Empfangszeit der Daten in der Servervorrichtung innerhalb des Gültigkeitszeitintervalls liegt. Mit anderen Worten ist es hierbei egal, wie alt die Daten sind, solange sie innerhalb des Gültigkeitszeitintervalls von der Servervorrichtung empfangen werden.

Die dynamische Generierung kann auch ortsabhängig gemacht werden. In diesem Zusammenhang ist dann bevorzugt vorgesehen, dass durch die erste Sendevorrichtung in die Daten eine aktuelle erste Ortsangabe eines Aufenthaltsorts der ersten Sendekomponente integriert wird. Beispielsweise gibt also das Kraftfahrzeug als erste Sendekomponente beispielsweise seine GPS-Koordinaten (GPS - Global Positioning System) in den Daten an. Durch die zweite Sendekomponente, also beispielsweise das Endgerät, wird zusammen mit den Daten eine zweite Ortsangabe eines Aufenthaltsorts der zweiten Sendekomponente an die Servervorrichtung weitergeleitet oder übermittelt. Mit anderen Worten kann also auch die zweite Sendekomponente beispielsweise ihre GPS-Koordinaten an die Servervorrichtung aussenden. Die Servervorrichtung akzeptiert die Informationen aus der ersten Sendevorrichtung nur dann, falls gemäß dem Validierungskriterium die erste Ortsangabe und die zweite Ortsangabe einen Abstand kleiner als ein vorbestimmter Höchstabstand definieren. Hierdurch ist sichergestellt, dass sich der Benutzer mit der zweiten Sendekomponente in der Nähe der ersten Sendekomponente befinden muss, wobei "Nähe" durch den besagten Höchstabstand definiert ist.

Mit den beschriebenen Methoden zur dynamischen Generierung der Daten kann die besagte erste Übertragungsschnittstelle auf einer standardisierten Technologie beruhen. In diesem Fall ist dann bevorzugt vorgesehen, dass die Daten über eine NFC-Übertragungseinrichtung (NFC - Near Field Communication) oder eine Bluetooth-Übertragungseinrichtung als funkbasierte erste Übertragungsschnittstelle oder über eine USB-Schnittstelle (USB - Universal Seriell Bus) als kabelgebundene erste Übertragungsschnittstelle oder durch Erzeugen einer Tonfolge als akustische Übertragungsschnittstelle oder durch Anzeigen eines Bildes und/oder eines QR-Codes auf einem Bildschirm als optische erste Übertragungsschnittstelle übertragen werden. Die zweite Sendekomponente erfasst die Bildschirmanzeige dann mittels einer Kamera. Das Bild umfasst hierbei bevorzugt eine Abbildung eines realen Gegenstands und/oder eine schematisierte Darstellung eines realen Gegenstands.

Die dynamische Generierung kann aber auch die Codierung der Daten betreffen, sodass keine standardmäßige Übertragung mehr erfolgt. Hierzu ist dann bevorzugt vorgesehen, dass die Daten in der beschriebenen Weise durch Anzeigen eines Bildes und/oder eines QR-Codes über einen Bildschirm als optische erste Übertragungsschnittstelle übertragen werden und hierbei für zumindest zwei Übertragungen unterschiedliche Bilder und/oder unterschiedliche QR-Codierungen durch die erste Sendekomponente verwendet werden. Die Rekonstruktion der Information aus dem Bild und/oder die Decodierung des QR-Codes ist dann in der Servervorrichtung nur möglich, falls diese das Bild beziehungsweise den QR-Code entziffern kann.

Es kann auch vorgesehen sein, dass die erste Sendekomponente über eine dritte Übertragungsschnittstelle unter Umgehung der zweiten Sendekomponente an die Servervorrichtung Validierungsdaten überträgt, welche das Validierungskriterium festlegen. Beispielsweise können die zu übertragenden Daten mit einem dynamisch generierten Passwort verschlüsselt werden und dieses Passwort dann über die dritte Übertragungsschnittstelle an die Servervorrichtung übertragen werden. Die dritte Übertragungsschnittstelle kann hierzu eine Mobilfunkverbindung und/oder eine Internetverbindung umfassen. Somit kann nur durch die Servervorrichtung eine Entschlüsselung der verschlüsselten Daten vorgenommen werden. Nur bei korrekter Entschlüsselung ist das Validierungskriterium in diesem Fall dann erfüllt.

Um eine solche Übertragung eines Passworts vermeiden zu können, ist aber bevorzugt vorgesehen, dass die Daten durch die erste Sendekomponente mittels eines öffentlichen Schlüssels der Servervorrichtung verschlüsselt werden. Ein öffentlicher Schlüssel ist ein erster Schlüssel aus einem Schlüsselpaar eines Public-Key-Verschlüsselungsverfahrens, wie es an sich aus dem Stand der Technik bekannt ist. Die Servervorrichtung entschlüsselt dann die Daten mittels ihres privaten Schlüssels, der hierzu nicht von der ersten Sendekomponente hin zur Servervorrichtung übertragen werden muss. Es ergibt sich somit eine Ende-zu-Ende-Verschlüsselung von der ersten Sendekomponente zur Servervorrichtung, ohne dass hierzu zuvor insbesondere ein Passwort über eine dritte Übertragungsschnittstelle übertragen werden muss.

Bisher wurde beschrieben, dass es sich bei den Informationen beispielsweise um eine Angabe zu einem Kraftfahrzeug handeln kann, wie beispielsweise dessen Fahrzeug-ID oder Fahrgestellnummer. Es kann aber auch sein, dass es sich bei den Informationen beispielsweise um ein Passwort handelt, mittels welchem ein Computerprogramm beispielsweise des Kraftfahrzeugs sich Zugang zu dem Benutzeraccount verschaffen muss, um dort beispielsweise Statusdaten zu hinterlegen. Falls diese Informationen, beispielsweise ein Passwort, geändert werden, so muss hierbei sichergestellt werden, dass es sich nicht um einen Manipulationsversuch handelt. Es kann also vorgesehen sein, dass durch die erste Sendekomponente, beispielsweise ein Endgerät, oder durch die zweite Sendekomponente, beispielsweise ein Kraftfahrzeug, eine Benutzereingabe eines Benutzers zum Ändern der Informationen empfangen wird. Diese Änderung der Informationen wird aber nur durchgeführt, falls zusammen mit der Benutzereingabe biometrische Identifikationsdaten zumindest eines vorbestimmten Benutzers empfangen werden. Beispielsweise können Fingerabdruckdaten überprüft werden, wie sie beispielsweise durch einen Fingerabdrucksensor eines Kraftfahrzeugs oder eines mobilen Endgeräts erzeugt werden können. Das Kraftfahrzeug kann einen solchen Fingerabdrucksensor beispielsweise auch zum Freischalten beispielsweise eines Motorsteuergeräts aufweisen.

Besonders bevorzugt ist vorgesehen, dass das beschriebene Verfahren für die Registrierung eines Kraftfahrzeugs in einem Benutzeraccount vorgesehen wird. Durch die Übertragung der Informationen wird also eine Registrierung eines Kraftfahrzeugs also erste Sendekomponente in der Steuervorrichtung durchgeführt. Hierzu umfassen die Informationen eine Fahrzeug-ID, wie beispielsweise eine Fahrgestellnummer. Diese Informationen werden über ein portables Endgerät als zweite Sendekomponente zur Eintragung in den durch die Servervorrichtung bereitgestellten und/oder verwalteten Benutzeraccount eines Benutzers des Endgeräts übertragen. Bei dem Verfahren ist sichergestellt, dass der Benutzer nicht irgendwelche Informationen mit einer Fahrzeug-ID eines fremden Kraftfahrzeugs an die Servervorrichtung mittels seines Endgeräts überträgt und hierdurch in seinen Benutzeraccount fremde Kraftfahrzeuge einträgt oder registriert.

Das erfindungsgemäße Verfahren beruht auf der dynamischen Generierung der Daten, welche die zu übertragenden Informationen repräsentieren. Entsprechend ist durch die Erfindung auch eine Vorrichtung zum Bereitstellen von Informationen an einer ersten Übertragungsschnittstelle vorgesehen. Diese Vorrichtung kann als Kraftfahrzeug oder als mobiles portables Endgerät ausgestaltet sein. Die erste Übertragungsschnittstelle ist insbesondere der beschriebene Bildschirm zum Anzeigen eines Bildes und/oder eines QR-Codes. Die Vorrichtung weist eine Prozessoreinrichtung auf, die einen Programmcode auf, der dazu eingerichtet ist, bei Ausführen durch die Prozessoreinrichtung die besagten Informationen als Daten bereitzustellen, die dynamisch generiert sind, sodass bei einem wiederholten Bereitstellen der Informationen und/oder zum Übertragen der Informationen an eine andere Servervorrichtung jeweils unterschiedliche Daten an der Übertragungsschnittstelle bereitgestellt oder ausgegeben werden.

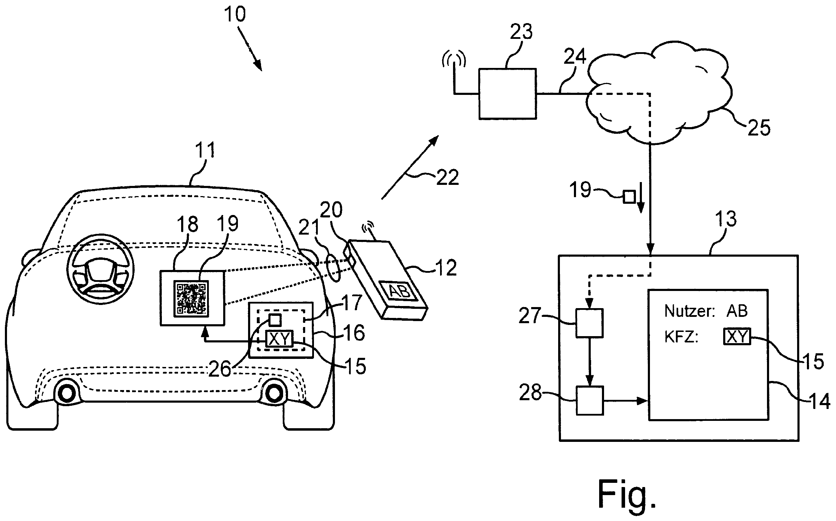

Im Folgenden ist ein Ausführungsbeispiel der Erfindung beschrieben. Hierzu zeigt die einzige Figur (Fig.) eine schematische Darstellung einer Ausführungsform eines Systems aus einer ersten Sendekomponente, einer zweiten Sendekomponente und einer stationären Servervorrichtung.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Figur zeigt ein System 10 mit einem Kraftfahrzeug 11, einem mobilen Endgerät 12 und einer Servervorrichtung 13. In dem veranschaulichten Beispiel stellt das Kraftfahrzeug 11 eine erste Sendekomponente, das Endgerät 12 eine zweite Sendekomponente dar. Bei dem Kraftfahrzeug 11 handelt es sich bevorzugt um einen Kraftwagen, insbesondere einen Personenkraftwagen. Bei dem Endgerät 12 kann es sich beispielsweise um ein Smartphone oder einen Tablet-PC oder eine Smartwatch handeln.

Das Endgerät 12 kann einem (nicht dargestellten) Benutzer gehören. Der Benutzer hat in der Servervorrichtung 13 einen Benutzeraccount 14 angelegt, in welchem er sein Kraftfahrzeug 11 registrieren möchte. Hierzu muss er beispielsweise eine Fahrzeug-ID 15 aus dem Kraftfahrzeug 11 auslesen und in den Benutzeraccount 14 eintragen. In dem Benutzeraccount 14 ist somit eine Verknüpfung zwischen dem Benutzernamen AB des Benutzers USER einerseits und der Fahrzeug-ID 15 (XY) des Kraftfahrzeugs 11 (CAR) hergestellt. Dies kann beispielsweise sinnvoll sein, um für den Benutzer Online-Dienste im Kraftfahrzeug 11 bereitzustellen.

Der Benutzer muss aber in seinem Endgerät 12 nicht umständlich beispielsweise die Fahrzeug-ID 15 eingeben. Die Fahrzeug-ID 15 stellt hierbei allgemein Informationen 15 dar, die von dem Kraftfahrzeug 11 als erste Sendekomponente über das Endgerät als zweite Sendekomponente in die Servervorrichtung 13 übertragen werden müssen, um sie dort in dem Benutzeraccount 14 eintragen oder registrieren zu können.

Bei dem Kraftfahrzeug 11 hierzu ist eine Prozessoreinrichtung 16 bereitgestellt, die Programmcode 17 aufweist, welcher die Informationen 15 an das Endgerät 12 ausgibt. Dies kann beispielsweise erfolgen, indem auf einer Anzeigeeinrichtung 18, beispielsweise einem Bildschirm, Daten 19 optisch oder graphisch dargestellt werden, welche die Informationen 15 enthalten. Bei den Daten 19 kann es sich insbesondere um einen QR-Code oder ein Bild von einem Gegenstand oder eine schematisierte Darstellung des Gegenstands handeln. Die Anzeigeeinrichtung 18 stellt eine erste Übertragungsschnittstelle dar, um die Daten 19 von dem Kraftfahrzeug 11 hin zum Endgerät 12 zu übertragen. Der Benutzer kann eine Kamera 20 des Endgeräts 12 nutzen, um die Daten 19 in das Endgerät 12 einzulesen oder einzugeben. Hierzu richtet er einen Erfassungsbereich 21 der Kamera 20 auf die Anzeigeeinrichtung 18 aus, sodass die Daten 19 durch die Kamera 20 erfasst und somit in dem Endgerät 12 vorliegen. Das Endgerät 12 kann nun beispielsweise über eine Funkverbindung 22 hin zu einem Mobilfunknetz 23 und über eine Internetverbindung 24 des Internets 25 die Daten 19 an die Servervorrichtung 13 übertragen. Die Funkverbindung 22 und die Internetverbindung 24 stellen eine zweite Übertragungsschnittstelle dar.

Es kann hierbei auch vorgesehen sein, dass die Informationen 15 nicht direkt als Daten 19 dargestellt werden, sondern die Prozessoreinrichtung 16 auf der Grundlage eines öffentlichen Schlüssels 26 die Informationen 15 verschlüsselt. Durch die Servervorrichtung 13 kann mittels eines privaten Schlüssels 27 eine Entschlüsselung vorgenommen werden oder durchgeführt werden, sodass die Daten 19 unverschlüsselt vorliegen.

Um zu validieren, dass das Endgerät die Daten 19 tatsächlich von dem Kraftfahrzeug 11 empfangen hat und die Daten 19 auch aktuell sind, wird ein Validierungskriterium 28 durch die Servervorrichtung 13 überprüft. Beispielsweise kann durch die Prozessoreinrichtung 16 in dem Kraftfahrzeug 11 in den Daten 19 zusätzlich zu den Informationen 15 selbst noch ein Zeitstempel mit einer aktuellen Zeitangabe integriert sein. Die Servervorrichtung 13 kann dann anhand einer eigenen Zeitgebereinrichtung (nicht dargestellt) als Validierungskriterium 28 überprüfen, ob die empfangenen Daten 19 jünger als ein vorbestimmtes Höchstalter sind, also beispielsweise jünger als 10 Minuten oder jünger als 5 Minuten. Nur in diesem Fall ist das Validierungskriterium 28 erfüllt und die in den Daten 19 enthaltenen Informationen 15 werden für die Eintragung in den Benutzeraccount 14 akzeptiert und dort gespeichert.

Die Informationen 15 sind also Credentials des Kraftfahrzeugs 11, die nicht auf dem Weg hin zur Servervorrichtung 13 manipuliert oder kopiert werden dürfen.

Anders als bei dem beschriebenen Ausführungsbeispiel kann auch anders herum vorgesehen sein, dass solche Credentials, z.B. ein Passwort, von dem Endgerät 12 in das Kraftfahrzeug 11 übertragen werden, damit das Kraftfahrzeug 11 über eine Mobilfunkverbindung und/oder eine Internetverbindung mit der Servervorrichtung 13 kommunizieren kann. Diese Credentials kann hierbei das Kraftfahrzeug 11 nutzen, um sich bei der Servervorrichtung 13 zu melden und die Verbindung zum Benutzeraccount 14 herzustellen. Hierbei kann eine manuelle Neuvergabe eines Passworts beispielsweise erst nach Fingerprintbestätigung akzeptiert werden oder durch Erzeugen einer Tonfolge als akustische Übertragungsschnittstelle.

Anders herum kann in der beschriebenen Weise die Fahrzeug-ID durch das Endgerät 12 genutzt werden, um das Kraftfahrzeug 11 dem Benutzeraccount 14 des Benutzers zuzuordnen, indem es diese Informationen 15 auf der Servervorrichtung 13 zuordnet.

Die Absicherung kann in der beschriebenen Weise über die verschlüsselte Verbindung erfolgen.

Der beschriebene QR-Code beziehungsweise sein Inhalt kann dynamisch generiert werden und auf einem Public-Key oder öffentlichen Schlüssel im Kraftfahrzeug 11 basieren. So kann eine Ende-zu-Ende-Verschlüsselung der Übertragung erfolgen. Die Servervorrichtung besitzt dabei den privaten Schlüssel. So kann eine Replay-Attacke (Zuweisen des Kraftfahrzeugs 11 an einen anderen Benutzeraccount, basierend auf dem abfotografierten QR-Code) unmöglich gemacht werden. Hierdurch ist dann auch eine direkte Übertragung von Informationen vom Kraftfahrzeug 11 hin zur Servervorrichtung 13 unnötig.

## Patentansprüche

1. Verfahren zum indirekten Übertragen von Informationen (15) von einer ersten mobilen Sendekomponente (11) über eine zweite mobile Sendekomponente (12) hin zu einer stationären Servervorrichtung (13), wobei
- eine der Sendekomponenten (11, 12) ein Kraftfahrzeug (11) und die andere der Sendekomponenten (11, 12) ein portables Endgerät (12) ist und bei dem Verfahren
- die Informationen (15) von der ersten Sendekomponente (11) über eine erste Übertragungsschnittstelle (18) zu der zweiten Sendekomponente (12) und
- von der zweiten Sendekomponente (12) über eine zweite Übertragungsschnittstelle (18) zu der Servervorrichtung (13) übertragen werden und
- die Informationen (15) bei der Übertragung durch Daten (19) repräsentiert sind, wobei
- die Daten (19) durch die erste Sendekomponente (11) für das Übertragen der Informationen (15) dynamisch generiert werden, so dass bei einem wiederholten Übertragen der Informationen (15) und/oder zum Übertragen der Informationen (15) an eine andere Servervorrichtung jeweils unterschiedliche Daten (19) erzeugt werden, und
- durch die Servervorrichtung (13) die in den Daten (19) enthaltenen Informationen (15) nur akzeptiert werden, falls die Daten (19) ein vorbestimmtes Validierungskriterium (28) erfüllen, **dadurch gekennzeichnet, dass** durch die erste Sendevorrichtung (11) in die Daten (19) eine aktuelle erste Ortsangabe eines Aufenthaltsorts der ersten Sendekomponente (11) integriert wird und durch die zweite Sendekomponente (12) zusammen mit den Daten eine zweite Ortsangabe eines Aufenthaltsorts der zweiten Sendekomponente (12) an die Servervorrichtung (13) übermittelt wird und die Servervorrichtung (13) die Informationen (15) nur akzeptiert, falls gemäß dem Validierungskriterium (28) die erste Ortsangabe und die zweite Ortangabe einen Abstand kleiner als ein vorbestimmter Höchstabstand definieren.

2. Verfahren nach Anspruch 1, wobei durch die erste Sendevorrichtung (11) in die Daten (19) eine aktuelle Zeitangabe und/oder ein Gültigkeitszeitintervall integriert wird und die Servervorrichtung (13) die Informationen (15) nur akzeptiert, falls gemäß dem Validierungskriterium (28) die Zeitangabe innerhalb eines vorbestimmten Zeitintervall und/oder eine Empfangszeit der Daten (19) in der Servervorrichtung (13) innerhalb des Gültigkeitszeitintervalls liegt.

3. Verfahren nach einem der vorhergehenden Ansprüche, wobei die Daten (19) über eine NFC-Übertragungseinrichtung oder eine Bluetooth-Übertragungseinrichtung als funkbasierte erste Übertragungsschnittstelle oder über eine USB-Schnittstelle als kabelgebundene erste Übertragungsschnittstelle oder durch Erzeugen einer Tonfolge als akustische Übertragungsschnittstelle oder durch Anzeigen eines Bildes und/oder eines QR-Codes (19) über einen Bildschirm (18) als optische erste Übertragungsschnittstelle übertragen werden.

4. Verfahren nach einem der Ansprüche 1 oder 2, wobei die Daten (19) durch Anzeigen eines Bildes und/oder eines QR-Codes über einen Bildschirm (18) als optische erste Übertragungsschnittstelle übertragen werden und für zumindest zwei Übertragungen unterschiedliche Bilder und/oder unterschiedliche QR-Codierungen durch die erste Sendekomponente (11) verwendet werden.

5. Verfahren nach einem der vorhergehenden Ansprüche, wobei die erste Sendekomponente (11) über eine dritte Übertragungsschnittstelle unter Umgehung der zweiten Sendekomponente an die Servervorrichtung Validierungsdaten, welche das Validierungskriterium festlegen, überträgt.

6. Verfahren nach einem der vorhergehenden Ansprüche, wobei durch die erste Sendekomponente (11) dynamisch mittels eines öffentlichen Schlüssels (26) der Servervorrichtung (13) verschlüsselte Daten (19) erzeugt werden und die Servervorrichtung (13) mittels eines privaten Schlüssels (27) die Daten (19) entschlüsselt.

7. Verfahren nach einem der vorhergehenden Ansprüche, wobei durch die erste Sendekomponente (11) oder durch die zweite Sendekomponente (12) eine Benutzereingabe eines Benutzers zum Ändern der Informationen (15) empfangen wird und die Änderung der Informationen (15) nur durchgeführt wird, falls zusammen mit der Benutzereingabe biometrische Identifikationsdaten zumindest eines vorbestimmten Benutzers empfangen werden.

8. Verfahren nach einem der vorhergehenden Ansprüche, wobei durch die Übertragung eine Registrierung eines Kraftfahrzeugs (11) als erster Sendekomponente (11) in der Servervorrichtung (13) durchgeführt wird und hierzu die Informationen (15) eine Fahrzeug-ID umfassen, welche über ein portables Endgerät (12) als zweite Sendekomponente (12) zur Eintragung in einen durch die Servervorrichtung (13) bereitgestellten und/oder verwalteten Benutzeraccount (14) eines Benutzers des Endgeräts (12) übertragen werden.

## Claims

1. Method for indirectly transferring information (15) from a first mobile transmitting component (11) to a stationary server device (13) via a second mobile transmitting component (12), wherein
- one of the transmitting components (11, 12) is a motor vehicle (11) and the other transmitting component (11, 12) is a portable terminal device (12), and in the method
- the information (15) is transferred from the first transmitting component (11) to the second transmitting component (12) via a first transfer interface (18), and
- from the second transmitting component (12) to the server device (13) via a second transfer interface (18), and
- the information (15) is represented by data (19) during the transfer,
Wherein
- for transferring the information (15), the data (19) are dynamically generated by the first transmitting component (11), so that different data (19) are generated when the information (15) are transferred repeatedly and/or in order to transfer the information (15) to another server device, and
- the server device (13) accepts the information (15) contained in the data (19) only if the data (19) satisfy a predetermined validity criterion (28),
**characterised in that**
a current first position information regarding a location of the first transmitting component (11) is integrated into the data (19) by the first transmitting component (11), and the second transmitting component (12) transfers a second position information regarding a location of the second transmitting component (12) to the server device (13) along with the data, and the server device (13) accepts the information (15) only if, in accordance with the validity criterion (28), the first position information and the second position information define a distance that is smaller than a predetermined maximum distance.

2. Method according to claim 1, wherein a current time information and/or a validity time interval is integrated into the data (19) by the first transmitting component (11) and the server device (13) accepts the information (15) only if, in accordance with the validity criterion (28), the time information is within a predetermined time interval and/or the reception time of the data (19) in the server device (13) is within a validity time interval.

3. Method according to any of the preceding claims, wherein the data (19) are transferred via an NFC transfer device or a Bluetooth transfer device as a radio-based first transfer interface or a USB interface as a wired first transfer interface, or by generating a sequence of sounds as an acoustic transfer interface, or by displaying an image or a QR code (19) via a screen (18) as an optical first transfer interface.

4. Method according to any of claims 1 or 2, wherein the data (19) are transferred by displaying an image and/or a QR code via a screen (18) as an optical first transfer interface, and, for at least two transfers, the first transmitting component (11) uses different images and/or different QR codes.

5. Method according to any of the preceding claims, wherein the first transmitting component (11) transfers to the server device, via a third transfer interface by bypassing the second transmitting component, validation data which define the validation criterion.

6. Method according to any of the preceding claims, wherein encrypted data (19) are dynamically generated by the first transmitting component (11) by means of a public key (26) of the server device (13), and the server device (13) decrypts the data (19) by means of a private key (27).

7. Method according to any of the preceding claims, wherein the user input of a user for changing the information (15) is received by the first transmitting component (11) or by the second transmitting component (12), and the information (15) is changed only if at least one predetermined user's biometric data is received with the user input.

8. Method according to any of the preceding claims, wherein a motor vehicle (11) is registered by the transfer as a first transmitting component (11) in the server device (13), and for this purpose the information (15) comprises a vehicle ID transferred by a portable terminal device (12) as a second transmitting component (12) for input in a user account (14) of a user of the terminal device (12) provided and/or managed by the server device (13).

## Revendications

1. Procédé de transmission indirecte d'informations (15) d'un premier composant d'émission mobile (11) en direction d'un dispositif serveur (13) fixe par l'intermédiaire d'un second composant d'émission (12) mobile, dans lequel
- un des composants d'émission (11, 12) est un véhicule automobile (11) et l'autre des composants d'émission (11, 12) est un terminal (12) portatif et selon le procédé
- les informations (15) sont transmises du premier composant d'émission (11) au second composant d'émission (12) par l'intermédiaire d'une première interface de transmission (18) et
- du second composant d'émission (12) au dispositif serveur (13) par l'intermédiaire d'une deuxième interface de transmission (18) et
- les informations (15) sont représentées par des données (19) lors de la transmission,
dans lequel
- les données (19) sont générées de façon dynamique par le premier composant d'émission (11) pour la transmission des informations (15), de sorte que, lors d'une transmission répétée des informations (15) et/ou pour la transmission des informations (15) à un autre dispositif serveur, respectivement des données (19) différentes sont générées, et
- les informations (15) contenues dans les données (19) ne sont acceptées par le dispositif serveur (13) que si les données (19) satisfont à un critère de validation (28) prédéfini, **caractérisé en ce qu'**une première indication actuelle de lieu d'un lieu de séjour du premier composant d'émission (11) est intégrée dans les données (19) par le premier dispositif d'émission (11) et une seconde indication de lieu d'un lieu de séjour du second composant d'émission (12) est transmise au dispositif serveur (13) par le second composant d'émission (12) conjointement avec les données et le dispositif serveur (13) n'accepte les informations (15) que si, conformément au critère de validation (28), la première indication de lieu et la seconde indication de lieu définissent un écart inférieur à un écart maximal prédéfini.

2. Procédé selon la revendication 1, dans lequel une indication actuelle de temps et/ou un intervalle de temps de validité est intégré(e) dans les données (19) par le premier dispositif d'émission (11) et le dispositif serveur (13) n'accepte les informations (15) que si, conformément au critère de validation (28), l'indication de temps se situe à l'intérieur d'un intervalle de temps prédéfini et/ou une heure de réception des données (19) dans le dispositif serveur (13) à l'intérieur de l'intervalle de validité.

3. Procédé selon l'une quelconque des revendications précédentes, dans lequel les données (19) sont transmises par l'intermédiaire d'un dispositif de transmission NFC ou d'un dispositif de transmission Bluetooth en tant que première interface de transmission par radio ou par l'intermédiaire d'une interface USB en tant que première interface de transmission filaire ou par génération d'une suite de sons en tant qu'interface de transmission acoustique ou par affichage d'une image et/ou d'un code QR (19) par l'intermédiaire d'un écran (18) en tant que première interface de transmission optique.

4. Procédé selon l'une quelconque des revendications 1 ou 2, dans lequel les données (19) sont transmises par affichage d'une image et/ou d'un code QR par l'intermédiaire d'un écran (18) en tant que première interface de transmission optique et, pour au moins deux transmissions, des images différentes et/ou des codes QR différents sont utilisés par le premier composant d'émission (11).

5. Procédé selon l'une quelconque des revendications précédentes, dans lequel le premier composant d'émission (11) transmet au dispositif serveur des données de validation, lesquelles déterminent le critère de validation, par l'intermédiaire d'une troisième interface de transmission avec contournement du second composant d'émission.

6. Procédé selon l'une quelconque des revendications précédentes, dans lequel des données (19) chiffrées au moyen d'une clé publique (26) du dispositif serveur (13) sont générées de manière dynamique par le premier composant d'émission (11) et le dispositif serveur (13) déchiffre les données (19) au moyen d'une clé privée (27).

7. Procédé selon l'une quelconque des revendications précédentes, dans lequel une entrée utilisateur d'un utilisateur destinée à modifier les informations (15) est reçue par le premier composant d'émission (11) ou par le second composant d'émission (12) et la modification des informations (15) n'est effectuée que si, conjointement avec l'entrée utilisateur, des données d'identification biométriques d'au moins un utilisateur prédéfini sont reçues.

8. Procédé selon l'une quelconque des revendications précédentes, dans lequel un enregistrement d'un véhicule automobile (11) en tant que premier composant d'émission (11) est effectué dans le dispositif serveur (13) par la transmission et à cet effet les informations (15) comprennent une identification de véhicule, lesquelles sont transmises par l'intermédiaire d'un terminal (12) portatif en tant que second composant d'émission (12) aux fins d'inscription dans un compte utilisateur (14), fourni et/ou géré par le dispositif serveur (13), d'un utilisateur du terminal (12).
